# EUROPEAN PATENT APPLICATION

(11) **EP 4 753 229 A1**
(43) Date of publication of application: **03.06.2026**
(21) Application number: 24857615.9
(22) Date of filing: 31.01.2024
(51) Int. Cl.: H04L 47/6275

(54) **COMMUNICATION METHOD AND COMMUNICATION APPARATUS**

(30) Priority: 28.08.2023 CN 202311093485
(71) Applicant: HUAWEI TECHNOLOGIES CO., LTD., Shenzhen, Guangdong 518129 (CN)
(72) Inventor: QU, Xiangfeng, Shenzhen, Guangdong 518129 (CN)
(74) Representative: Huawei European IPR
(86) International application number: PCT/CN2024/074978
(87) International publication number: WO 2025/044058

(57) **Abstract**

A communication method and a communication apparatus are provided. The communication method is applied to a first host, and includes: setting a first remote command table RCT in the first host, where the first RCT is used to store remote commands corresponding to a plurality of processes of at least one second host. The first host receives a packet of a remote command from any second host among the at least one second host, and determines a processing policy of the remote command based on storage space usage of the first RCT. In the communication method, the first host may set one RCT for the plurality of processes of the at least one second host, the plurality of processes share the RCT, and an RCT does not need to be set for each process. Therefore, resource sharing can be implemented, and resource overheads can be reduced.

## Description

This application claims priority to Chinese Patent Application No. 202311093485.9, filed with the China National Intellectual Property Administration on August 28, 2023 and entitled "COMMUNICATION METHOD AND COMMUNICATION APPARATUS", which is incorporated herein by reference in its entirety.

### TECHNICAL FIELD

This application relates to the field of computer technologies, and in particular, to a communication method and a communication apparatus.

### BACKGROUND

In an enterprise data center or a supercomputing center, a network architecture used by a service computing cluster is usually an InfiniBand (InfiniBand, IB) network or a remote direct memory access over converged Ethernet (RDMA over converged Ethernet, RoCE) network. The IB network and the RoCE network allow a remote direct memory access (remote direct memory access, RDMA) technology to be used in the conventional Ethernet. Based on a mature ecosystem of the conventional Ethernet, the IB network and the RoCE network have obvious cost advantages, with version evolution speeds far higher than those of other types of networks. Therefore, the IB network and the RoCE network will become mainstream network options in the future.

In the IB network and the RoCE network, when a queue pair (Queue pair, QP) is established, a source device and a destination device negotiate a maximum outstanding (outstanding) quantity of read (Read) and atomic (Atomic) operations that can be sent. In addition, Each QP is configured with dedicated queue resources to store read and atomic commands. A larger quantity of QPs indicates more storage resources.

Currently, an outstanding quantity, negotiated between the source device and the destination device, of read and atomic operations of a single QP is usually small. For example, the outstanding quantity is 128. Because the outstanding quantity of read and atomic operations of the single QP is small, when round trip time (Round Trip Time, RTT) is large, read and atomic message rates of the single QP are low. Therefore, how to save storage resources while ensuring the read and atomic message rates of the single QP is an urgent problem to be resolved.

### SUMMARY

This application provides a communication method and apparatus, for a destination device to use a shared resource to receive remote commands sent by a plurality of source devices, thereby saving storage resources.

According to a first aspect, a communication method is provided, and is applied to a first host. The method may be performed by the first host, or may be performed by a circuit or a chip configured in the first host. This is not limited in this application. For ease of description, the following uses an example in which the first host performs the method for description.

The communication method includes: setting a first remote command table RCT in the first host, where the first RCT is used to store remote commands corresponding to a plurality of processes, and the plurality of processes belong to at least one second host; and receiving a packet of a remote command from any second host among the at least one second host, and determining a processing policy of the remote command based on storage space usage of the first RCT.

Based on the foregoing technical solution, the first host is used as a destination device, and the second host is used as a source device. For the first host, the first host is a local end, the second host is a remote end, and a command sent by the second host is referred to as a remote command. Specifically, in this solution, the first RCT is set in the first host, and the first RCT may be used to store the remote commands corresponding to the plurality of processes of the at least one second host. When receiving a remote command from the second host, the first host may determine a processing policy of the remote command based on the storage space usage of the first RCT. In the communication method, the first host may set one RCT for the plurality of processes of the at least one second host, the plurality of processes share the RCT, and an RCT does not need to be set for each process. Therefore, resource sharing can be implemented, and resource overheads can be reduced. In addition, in this solution, the plurality of processes share one RCT, which may be set to have larger space, thereby ensuring a remote command transmission rate.

With reference to the first aspect, in some implementations of the first aspect, a packet header of the remote command includes a first identifier, and the first identifier is used to identify that the remote command is an initially transmitted remote command or a retransmitted remote command.

Based on the foregoing technical solution, the packet header of the remote command sent by the second host includes the first identifier, and the first identifier indicates that the remote command is the initially transmitted remote command or the retransmitted remote command, so that the first host can process different types of remote commands in a targeted manner based on the types of the remote commands.

With reference to the first aspect, in some implementations of the first aspect, the method further includes: setting a first threshold in the first RCT; and determining the processing policy of the remote command based on the storage space usage of the first RCT includes: determining the processing policy of the remote command based on the first threshold and the storage space usage of the first RCT.

With reference to the first aspect, in some implementations of the first aspect, determining the processing policy of the remote command based on the first threshold and the storage space usage of the first RCT includes: processing the remote command according to a first processing policy if used storage space of the first RCT exceeds the first threshold; or processing the remote command according to a second processing policy if the used storage space of the first RCT does not exceed the first threshold.

Based on the foregoing technical solution, the first threshold may be set in the first RCT. In addition, when the processing policy of the remote command is determined, a relationship between the used storage space of the first RCT and the first threshold is considered. Different processing policies are used based on whether the used storage space of the first RCT exceeds the first threshold. Therefore, different processing policies of the remote command can be accurately determined based on the used storage space of the first RCT.

With reference to the first aspect, in some implementations of the first aspect, processing the remote command according to the first processing policy if the used storage space of the first RCT exceeds the first threshold includes: if the remote command is the initially transmitted remote command, determining to discard the remote command; or if the remote command is the retransmitted remote command, determining to receive the remote command, and store the remote command in the first RCT.

Based on the foregoing technical solution, when the used storage space of the first RCT exceeds the first threshold, the first host may preferentially process the retransmitted remote command. This can avoid repeated discarding of a remote command to some extent.

With reference to the first aspect, in some implementations of the first aspect, when it is determined to discard the remote command, the method further includes: sending a first transaction negative acknowledgment TANAK, where the first TANAK is used to indicate to retransmit the remote command after first duration.

With reference to the first aspect, in some implementations of the first aspect, the method further includes: setting a second threshold in the first RCT, where the second threshold is greater than the first threshold; and determining the processing policy of the remote command based on the storage space usage of the first RCT includes: determining the processing policy of the remote command based on the second threshold and the storage space usage of the first RCT.

With reference to the first aspect, in some implementations of the first aspect, determining the processing policy of the remote command based on the second threshold and the storage space usage of the first RCT includes: if the used storage space of the first RCT exceeds the second threshold and the remote command is the initially transmitted remote command, determining to discard the remote command; and the method further includes: sending a second transaction negative acknowledgment TANAK, where the second TANAK is used to indicate to retransmit the remote command after second duration, and the second duration is greater than the first duration.

Based on the foregoing technical solution, different thresholds may be set in the first RCT. When the remote command is received, usage of the first RCT may be determined based on a relationship between the used storage space of the first RCT and the different thresholds. When the used storage space of the first RCT exceeds the second threshold, the initially transmitted remote command is discarded. Compared with a case in which the used storage space of the first RCT exceeds the first threshold, that the first host indicates to retransmit the remote command requires a longer duration before the retransmission, to avoid congestion of the first RCT. For example, when the used storage space of the first RCT exceeds the second threshold, the first RCT has stored a large quantity of to-be-processed remote commands, and congestion is severe. Therefore, the first host may indicate, by using the second TANAK, the second host to increase a retransmission interval, to reduce a remote command sending rate.

With reference to the first aspect, in some implementations of the first aspect, determining the processing policy of the remote command based on the storage space usage of the first RCT includes: if the first RCT is full, determining to discard the remote command; and the method further includes: sending a third transaction negative acknowledgment TANAK, where the third TANAK is used to indicate to retransmit the remote command, where if the remote command is the retransmitted remote command, the third TANAK is used to indicate to retransmit the remote command after the first duration.

Based on the foregoing technical solution, if the first RCT is full after the first host receives the packet of the remote command, regardless of whether the remote command is the initially transmitted remote command or the retransmitted remote command, the first host discards the remote command and indicates the source device to retransmit the remote command. For the initially transmitted remote command, the second host retransmits the remote command after the second duration after receiving the third TANAK, and for the retransmitted remote command, the third TANAK is used to indicate the second host to retransmit the remote command after the first duration after the third TANAK is received, so that a transmission frequency of a 're-retransmitted remote command' is higher than that of an 'initially retransmitted remote command', and therefore the 're-retransmitted remote command' is more likely to be received than the 'initially retransmitted remote command'.

With reference to the first aspect, in some implementations of the first aspect, the method further includes: setting a second RCT in the first host, where priorities of processing the remote command stored in the first RCT and a remote command stored in the second RCT are different; or a process corresponding to the second RCT is different from a process corresponding to the first RCT.

Based on the foregoing technical solution, the first host may set a plurality of RCTs. For example, RCTs are set for different processes, and each RCT corresponds to a plurality of processes. For another example, the plurality of RCTs are set for remote commands with different priorities.

With reference to the first aspect, in some implementations of the first aspect, the method further includes: separately establishing a transport group TPG between the first host and the at least one second host.

With reference to the first aspect, in some implementations of the first aspect, the remote command includes a read request or an atomic request.

With reference to the first aspect, in some implementations of the first aspect, receiving the packet of the remote command from the any second host among the at least one second host includes: receiving the packet of the remote command from the any second host among the at least one second host through a communication interface Jetty, where the Jetty is configured to receive a packet of a remote command from the at least one second host.

According to a second aspect, a communication method is provided, and is applied to a second host. The method may be performed by the second host, or may be performed by a circuit or a chip configured in the second host. This is not limited in this application. For ease of description, the following uses an example in which the second host performs the method for description.

The communication method includes: generating a packet of a remote command, where a packet header of the remote command includes a first identifier, and the first identifier is used to identify that the remote command is an initially transmitted remote command or a retransmitted remote command; and sending the packet of the remote command to a first host.

With reference to the second aspect, in some implementations of the second aspect, the method further includes: receiving a first transaction negative acknowledgment TANAK from the first host, where the first TANAK is used to indicate to retransmit the remote command after first duration; or receiving a second transaction negative acknowledgment TANAK from the first host, where the second TANAK is used to indicate to retransmit the remote command after second duration, and the second duration is greater than the first duration.

For technical effects of the method shown in the second aspect and the possible designs of the second aspect, refer to the technical effects in the first aspect and the possible designs of the first aspect.

According to a third aspect, a communication apparatus is provided. The apparatus includes: a storage module, configured to store a program; and a processing module, configured to execute the program stored in the storage module. When the program stored in the storage module is executed, the processing module is configured to perform the methods provided in the foregoing aspects.

According to a fourth aspect, a computer-readable storage medium is provided. The computer-readable medium stores program code executed by a device, and the program code includes instructions for performing the methods provided in the foregoing aspects.

According to a fifth aspect, a computer program product including instructions is provided. When the computer program product runs on a computer, the computer is enabled to perform the methods provided in the foregoing aspects.

According to a sixth aspect, a chip is provided. The chip includes a processing module and a communication interface. The processing module reads, through the communication interface, instructions stored in a memory, to perform the methods provided in the foregoing aspects.

Optionally, in an implementation, the chip may further include a storage module. The storage module stores instructions, and the processing module is configured to execute the instructions stored in the storage module. When the instructions are executed, the processing module is configured to perform the methods provided in the foregoing aspects.

According to a seventh aspect, a chip is provided. The chip includes a network management unit configured to perform the method according to the first aspect and a bus device configured to perform the method according to the second aspect.

According to an eighth aspect, a computer system is provided. The computer system includes the chip shown in the seventh aspect.

According to a ninth aspect, a terminal device is provided. The terminal device includes the chip shown in the seventh aspect. For example, the terminal device includes but is not limited to a terminal like a mobile phone or a vehicle.

According to a tenth aspect, a system for accessing a configuration space is provided. The system includes a first host configured to perform the method provided in the first aspect and a second host configured to perform the method provided in the second aspect.

### BRIEF DESCRIPTION OF DRAWINGS

FIG. 1 is a diagram of a structure of a computer device according to an embodiment of this application;
FIG. 2 is a diagram of a data center according to an embodiment of this application;
FIG. 3 is a diagram of a universal bus protocol packet format according to an embodiment of this application;
FIG. 4 is a diagram of structures of hosts according to an embodiment of this application;
FIG. 5 is a schematic flowchart of a communication method according to this application;
FIG. 6 is a diagram of setting thresholds in a first RCT according to an embodiment of this application;
FIG. 7 is a diagram of remote command transmission according to an embodiment of this application;
FIG. 8 is a diagram of other remote command transmission according to an embodiment of this application;
FIG. 9 is a diagram of other remote command transmission according to an embodiment of this application;
FIG. 10 is a diagram of other remote command transmission according to an embodiment of this application;
FIG. 11 is a diagram of a structure of a communication apparatus 1100 according to an embodiment of this application;
FIG. 12 is a diagram of a structure of a chip system 1200 according to an embodiment of this application; and
FIG. 13 schematically shows a conceptual partial view of a computer program product according to an embodiment of this application.

### DESCRIPTION OF EMBODIMENTS

For ease of understanding of embodiments of this application, the following several points are described.

First, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S510" are merely identifiers for ease of description, and do not limit a sequence of performing steps.

Second, in embodiments of this application, words such as "example" or "for example" represents giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

Third, "storage" in embodiments of this application may be storage in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fourth, "include" (also referred to as "includes", "including", "comprises", and/or "comprising") in embodiments of this application, when being used in this specification, specifies presence of stated features, integers, steps, operations, elements, and/or components, with presence or addition of one or more other features, integers, steps, operations, elements, components, and/or their components not excluded.

Fifth, "if" in embodiments of this application may be explained as "when..." ("when" or "upon"), "in response to determining", or "in response to detecting". Similarly, according to the context, a phrase "if determining..." or "if detecting (a stated condition or event)" may be interpreted as a meaning of "when determining...", "in response to determining...", "when detecting (a stated condition or event)", or "in response to detecting (a stated condition or event)".

Sixth, the terms used in the descriptions of the various examples in embodiments of this application are merely intended to describe specific examples, but are not intended to constitute a limitation. The terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

The following describes technical solutions in embodiments of this application with reference to accompanying drawings.

This application relates to access of a processor in a computer system to a configuration space of an external device. The computer system may be a server or a terminal. The terminal includes but is not limited to user systems such as a desktop computer, a notebook computer, and a smartphone. For ease of understanding, the following describes a structure of the computer system.

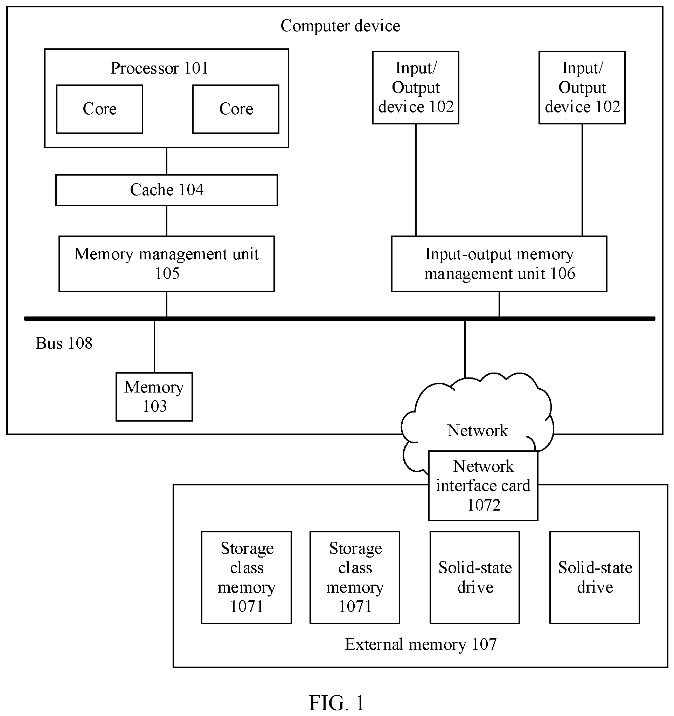

Refer to a diagram of a structure of a computer system shown in FIG. 1. The computer system includes a processor 101, an input/output device (input/output device, I/O device) 102, a memory 103, a cache 104, a memory management unit (memory management unit, MMU) 105, an input-output memory management unit (input-output memory management unit, IOMMU) 106, an external memory 107, and a bus 108.

The processor 101 includes at least one core (core). The core is also referred to as a computing engine. Each core may independently execute a task. When the processor 101 includes a plurality of cores, tasks from an application may be classified, so that the application can make full use of the plurality of cores to execute more tasks within specific time. In this embodiment, the processor 101 may be a main processor, for example, a central processing unit (Central Processing Unit, CPU).

The input/output device 102 is a hardware device that has a data input capability and/or a data output capability. The input/output device 102 may be divided into an input device and an output device. The input device may include a device like a mouse, a keyboard, a joystick, a stylus, or a microphone, and the output device may include a device like a display or a speaker.

The memory 103 is also referred to as an internal memory or a main memory, and is configured to temporarily store operation data in the processor 101. Further, the memory 103 is further configured to temporarily store data exchanged with the external memory 107. The memory 103 may be generally implemented by using a storage medium like a dynamic random access memory DRAM or a static random access memory (static random access memory, SRAM).

The cache 104 (in this embodiment, the cache is a processor cache, for example, a CPU cache) is a component configured to reduce average time required for the processor 101 to access the memory 103. Refer to FIG. 1. In a pyramid storage system, the cache 104 is located at a second layer from top to bottom, is only lower than a register (not shown in FIG. 1) of the processor 101, and is higher than the memory 103 (the memory 103 is located at a third layer from top to bottom). Generally, a capacity of the cache 104 is far less than that of the memory 103, but an access speed may be close to a frequency of the processor 101.

The memory management unit 105 is computer hardware configured to process a data access request. The memory management unit 105 is specifically configured to map a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input-output memory management unit 106 is essentially a memory management unit. Similar to that the memory management unit 105 maps a virtual address visible to the processor 101 to a physical address, the input-output memory management unit 106 is configured to map a virtual address (which may also be referred to as a device address or an I/O address) visible to the input/output device 102 to a physical address.

The external memory 107 is also referred to as an external storage or a secondary memory, and is usually configured to persistently store data. For example, the external memory 107 may persistently store the operation data in the processor 101. Even if power supply is abnormal, data that has been written into the external memory 107 will remain intact. This avoids a data loss. During specific implementation, the external memory 107 includes at least one non-volatile memory 1071. When the external memory includes a plurality of non-volatile memories, the plurality of non-volatile memories may be of a same type, or may be of different types. For example, in an example of FIG. 1, the external memory 107 may include two types of non-volatile memories, for example, a storage class memory (storage class memory, SCM) and a solid-state drive (solid-state drive, SSD).

The bus 108 is configured to connect functional components of the computer system. The bus 108 is a public communication backbone for transmitting information between the functional components of the computer system. The bus 108 may be a transmission wire bundle formed by wires. The bus 108 may be further classified into an internal bus and an external bus based on different connection objects.

The internal bus uses an internal bus protocol to transmit information. The internal bus protocol includes a bus protocol used to access memory space of the computer system. The external bus uses an external bus protocol to transmit information. The external bus protocol includes a bus protocol used to access external memory space of the computer system. The memory space is address space of the memory, and the external memory space is address space of the external memory.

In some embodiments, the internal bus protocol includes but is not limited to a peripheral component interconnect (peripheral component interconnect, PCI) bus, a peripheral component interconnect express (PCI Express, PCIe) protocol, a quickpath interconnect (Intel^{™} QuickPath Interconnect, QPI) protocol, and a universal bus (universal bus) protocol. The external bus protocol includes but is not limited to a small computer system interface (small computer system interface, SCSI) protocol or a serial attached small computer system interface (Serial Attached SCSI, SAS) protocol.

It should be noted that the computer system shown in FIG. 1 is described by using an example in which the external memory 107 is a remote external memory. As shown in FIG. 1, the external memory 107 includes a network interface card 1072. The network interface card 1072 may be, for example, a smart network interface card NIC (that is, a network adapter card). The external memory 107 accesses a network via the network interface card 1072, and is further connected to another component of the computer system 101 over the network. The network may be a wired communication network, for example, an optical fiber communication network, or may be a wireless communication network, for example, a wireless local area network (wireless local area network, WLAN) or a fifth generation (fifth generation, 5G) mobile communication network.

In some possible implementations, the external memory 107 of the computer system may alternatively be a local external memory, and another component of the computer system, for example, the processor 101, may be connected to the local external memory through the bus 108. In some other possible implementations, the computer system may include both a remote external memory and a local external memory. In addition, this embodiment of this application is applicable to a centralized storage scenario or a distributed storage scenario. This is not limited in this embodiment.

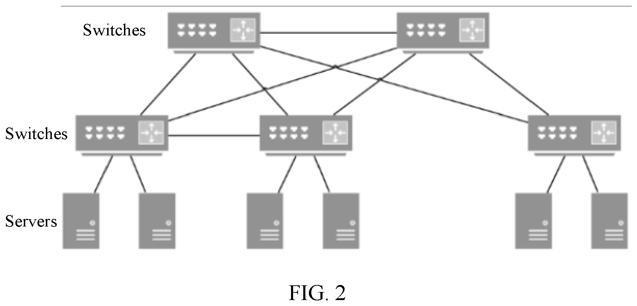

For example, a manner of accessing a configuration space register of a bus device provided in embodiments of this application may be further applied to a server cluster that communicates across networks shown in FIG. 2, for example, a data center shown in FIG. 2. An internal structure of a switch or a server shown in FIG. 2 is shown in FIG. 1 above.

In addition, the internal bus protocol supported by the computer system in this application includes the universal bus protocol, and a transport connection can be established between computer systems. The universal bus protocol may also be referred to as a Lingqu bus protocol or a unified bus protocol, and is a bus protocol standard. A name of the universal bus protocol is not limited in this application.

The universal bus protocol breaks existing protocol barriers and eliminates unnecessary conversion overheads, thereby achieving an ultra-low latency. The universal bus protocol defines an independent transaction (Transaction, TA) layer and transport (Transport, TP) layer. There is a connection between transport layers, but no connection between transaction layers. For a host (host), there is no connection between transaction layers of two hosts, but there is a connection between transport layers of the two hosts. In this case, all transactions of any host in the two hosts are carried on a transport layer for transmission. The universal bus protocol includes the transport layer and the transaction layer. The transport layer is responsible for retransmission of a lost packet on a network to ensure reliable transmission, and the transaction layer processes different transactions. The transport layer receives a packet from the network, strips a transport header, and forwards a packet without the transport header to the transaction layer.

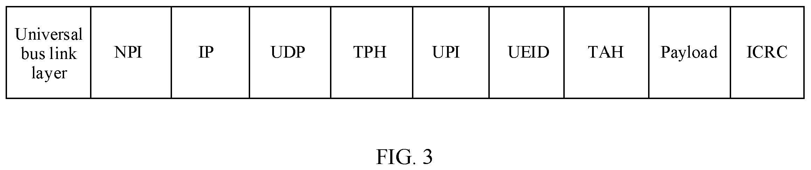

FIG. 3 shows a universal bus protocol packet format. Specifically, field definitions in the universal bus protocol packet format are shown in Table 1:

**Table 1**

| Name (name) | Description (description) |
|---|---|
| Universal bus link (universal bus LINK) layer | Link (LINK) layer defined in the universal bus protocol, where the universal bus link layer may be replaced with Ethernet MAC, and this form is defined as universal bus over Ethernet in the universal bus protocol |
| Network partition ID (Network Partition ID, NPI) | Used for physical network isolation |
| IP | IP protocol header |
| User datagram protocol (User Datagram Protocol, UDP) | UDP protocol header, where a UDP destination port 4792 indicates a universal bus packet, and the UDP is followed by a transport header (Transport Header, TPH) |
| TPH | Transport header, including content such as a TP opcode, a source TPN, a destination TPN, and a packet sequence number (Packet Sequence Number) |
| Universal bus partition ID (universal bus partition ID, UPI) | Used for tenant isolation |
| Universal bus entity ID (universal bus Entity ID, UEID) | Includes a source entity identifier (Source Entity ID) and a destination entity identifier (Destination Entity ID), where a bit width of the entity ID is 128 bits and is unique on the entire network, and an entity identifier (EID) may represent a virtual machine, or may represent an SSD controller |
| Transaction header (Transaction Header, TAH) | Transaction header, including a TA opcode (indicating a transaction operation type like send, read, write, atomic, or transaction layer acknowledgment), a destination JFR number, a transaction segment sequence number (Transaction Segment Sequence Number, TASSN), a read/write address, a length, and the like. |
| Payload (payload) | Payload part of a universal bus protocol packet |
| Invariable cyclic redundancy check (invariable Cyclic Redundancy Check, ICRC) code | Used to check the universal bus protocol packet |

Specifically, an interaction interface between the transaction layer of the universal bus protocol and an application is referred to as a Jetty. A message of the application may be sent to any destination through one Jetty, or a message from any source may be received through one Jetty. A Jetty that can be used for only sending is defined as a Jetty For Send (Jetty For Send, JFS), and a Jetty that can be used for only reception is defined as a Jetty For Receive (Jetty For Receive, JFR).

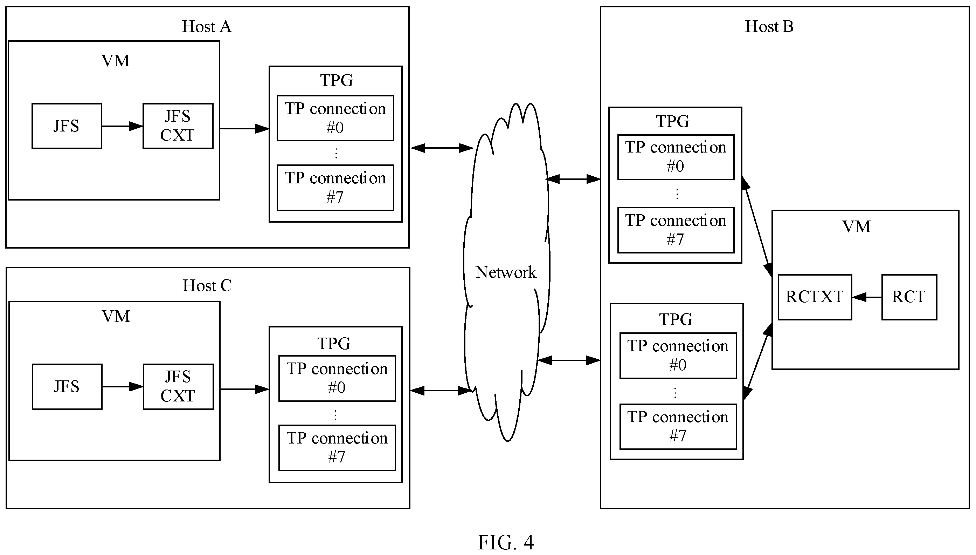

FIG. 4 is a diagram of structures of hosts according to an embodiment of this application. The hosts (for example, a host A, a host B, and a host C that are shown in FIG. 4) may be applied to the application scenario of cross-network communication shown in FIG. 2. The host A and the host C may be understood as source devices, and the host B may be understood as a destination device. The source device sends a remote command to the destination device.

As shown in FIG. 4, the host B includes several virtual machines (Virtual Machine, VM), and one VM includes several processes and several remote command tables (Remote Command Table, RCT), and is configured to receive a remote command (for example, a read command). One process corresponds to several communication interfaces (for example, Jetties), a communication interface that can be used for only sending (for example, a JFS), and a communication interface that can be used for only reception (for example, a JFR). A packet related to a process may be transmitted through a communication interface corresponding to the process. The Jetty is bidirectional and can perform both reception and sending, the JFS is unidirectional and can perform only sending, and the JFR is unidirectional and can perform only reception.

The Jetty, the JFS, the JFR, and the RCT have respective contexts (context, CXT). Several TP connections (for example, a total of eight TP connections from a TP connection #0 to a TP connection #7 shown in FIG. 4) are established between two hosts. The eight TP connections may form a transport group (Transport Group, TPG), and all traffic between the two hosts passes through the TPG. The eight TP connections may be distributed on different physical ports. The traffic is evenly sent among the eight TP connections to implement multi-port multi-path. The TP connection and the TPG belong to a transport layer. A packet loss may occur on a network when the two hosts communicate over the network. In this case, the TP connection is responsible for retransmission of a lost packet on the network, to ensure end-to-end reliability. The TP connection is responsible for end-to-end congestion control.

In FIG. 4, the host B includes the several VMs and several processes (process).

The foregoing briefly describes, with reference to FIG. 1 to FIG. 4, the scenario to which this application can be applied and the internal logical units of the host. For ease of understanding embodiments of this application, some basic concepts in this application are briefly described.
1. Packet sequence number (packet sequence number, PSN): When sending a packet, a transport layer of a transmitter adds a PSN to each packet to identify the packet. The PSN increases packet by packet. After receiving the packet, a receiver returns a TPACK (carrying the PSN of the received packet) to notify the transport layer of the transmitter that the packet has been correctly received. If the receiver receives the packet and finds that a packet with a smaller PSN is not received, the receiver determines that 'the packet with the smaller PSN' is lost on a network and returns a TPSACK (carrying the PSN of the received packet and the PSN of the lost packet). After receiving the TPSACK, the transport layer of the transmitter retransmits the lost packet.
2. Segment sequence number (Segment sequence number, SSN): A message at a transaction layer may be large, for example, 16 MB. In a UB protocol, a plurality of transaction layers share one transport layer. To prevent a message at a transaction layer from occupying a transport connection for a long time, when sending the message to the transport layer, the transaction layer divides the message into a plurality of segments, and adds an SSN to each segment to identify the segment. The SSN increases slice by slice. For example, if a slice is 64 KB, a transaction layer sends one slice to the transport layer each time.
3. Transaction acknowledgment (Transaction ACK, TAACK): After the receiver receives a complete segment (the segment is split into a plurality of packets at the transport layer) and correctly executes the segment (for example, the segment is correctly read or written into a memory), the receiver returns a TAACK to notify a transaction layer of the transmitter that the segment has been correctly executed. Alternatively, after successfully receiving a message from the transmitter, the receiver returns a TAACK to notify the transaction layer of the transmitter that the message has been successfully received.
4. Transaction negative acknowledgment (Transaction No OK ACK, TANAK): When the receiver receives a segment and an execution error occurs (for example, a page fault occurs when the segment is read or written into a memory), the receiver returns a TANAK to notify the transaction layer of the transmitter to retransmit the segment. Alternatively, if the receiver fails to receive a message from the transmitter, the receiver returns a TANAK to notify the transaction layer of the transmitter to retransmit the message.
5. Remote direct memory access (Remote Direct Memory Access, RDMA): Data is directly transferred to a storage area of a computer over the network. The data is quickly moved from a system to a remote system memory without intervention of operating systems or kernels of two computer devices. Overheads of external memory replication and context switching are eliminated in RDMA, to free up memory bandwidth and a CPU cycle to improve application system performance.
6. Queue pair (Queue Pair, QP): A QP is connected to another QP. For example, a message in a send queue of one QP is transmitted to a receive queue of another QP.

Specifically, during RDMA, before establishing a connection, two parties first create contexts, and create protection domains (Protection Domain, PD) to associate queue pair QPs with memory regions (Memory Region, MR). Then, the two parties create the QPs. Each QP includes two first in first out (first in first out, FIFO) work queues: a send queue (send Queue, SQ) used for sending a request, and a receive queue (receive Queue, RQ) used for receiving a request. Each of the two work queues is associated with a completion queue (Completion Queue, CQ). To allow an RDMA network interface card to have access to a memory, the memory needs to be registered. This type of memory that can be arbitrarily accessed by the both parties is referred to as a memory that supports RDMA access, and a remote address is a start virtual address of the memory region. After creating the MRs, the both parties each generate an 8-byte key. The both parties should exchange their keys and a virtual address of the registered memory. Each MR includes a key of the MR (lkey) and a key of the remote memory (rkey). The rkey needs be used to access the registered remote memory. Generally, it takes about 10s to create 4096 connections via a native communication library RDMA_CM of RDMA. Average time required for creating each connection ranges from 1 ms to 5 ms. In RDMA, when 32 bytes are transmitted, a delay is about 4 µs each time. Consequently, to create the connections, sending of hundreds of network data packets needs to be delayed.

7. Outstanding quantity: An outstanding quantity indicates a capability of sending a plurality of read/write transactions (transaction) when a host does not receive a response (response). It is assumed that N instructions have been sent. If no write response is returned during this period, the host needs to wait for the write response before sending a command through an address channel. If the write response is returned, instructions can be sent, where a quantity of instructions needs to be the same as a quantity of returned responses.

8. Queue resource: Hosts negotiate a maximum outstanding quantity of read (Read) and atomic (Atomic) operations that can be sent. In addition, each QP is configured with dedicated queue resources to store read and atomic commands. The queue resources are not shared among the QPs. A larger quantity of QPs indicates more storage resources. For example, a QP #1 in a host A is connected to a QP #1 in a host B, and a QP #2 in the host A is connected to a QP #2 in the host B. The host A needs to separately set queue resources for the QP #1 and the QP #2 to store read and atomic commands transmitted by using the corresponding QPs. Similarly, the host B needs to separately set queue resources for the QP #1 and the QP #2 to store read and atomic commands transmitted by using the corresponding QPs.

9. Process: A process is an activity performed regarding a data set by a program in a computer, is a basic unit for performing resource allocation by a system, and is a structural basis of an operating system. In an early process-oriented computer architecture, the process is a basic execution entity of a program. In a modern thread-oriented computer architecture, the process is a container for threads. The program is a description of an instruction, data, and an organizational form thereof. The process is a program entity.

The foregoing briefly describes, with reference to FIG. 2, the scenario to which the communication method provided in this application is applicable, and describes the basic concepts in this application. The QP and the queue resource are also described in the basic concepts. A larger networking scale indicates more required QPs, and more consumed queue storage resources.

To save the storage resources, an outstanding quantity, negotiated between hosts (for example, a source device and a destination device), of read and atomic operations of a single QP is usually small. For example, the outstanding quantity is 128. However, if the outstanding quantity of read and atomic operations of the single QP is small, when RTT is large, read and atomic message rates of the single QP are low.

To resolve a problem that the read and atomic message rates are low in a current resource use method, this application provides a communication method and apparatus. A destination device receives, by using a shared resource, read and atomic requests sent by a plurality of source devices, thereby saving storage resources. The following describes in detail the communication method provided in this application with reference to the accompanying drawings.

It should be understood that the communication method provided in embodiments of this application may be applied to a computer system, for example, the cross-network communication system shown in FIG. 2.

It should be further understood that the embodiments shown below do not particularly limit a specific structure of an execution body of the method provided in embodiments of this application, provided that the method provided in embodiments of this application can be implemented by running a program that records code of the method provided in embodiments of this application. For example, the execution body of the method provided in embodiments of this application may be a device, or may be a functional module that is in the device and that can invoke the program and execute the program.

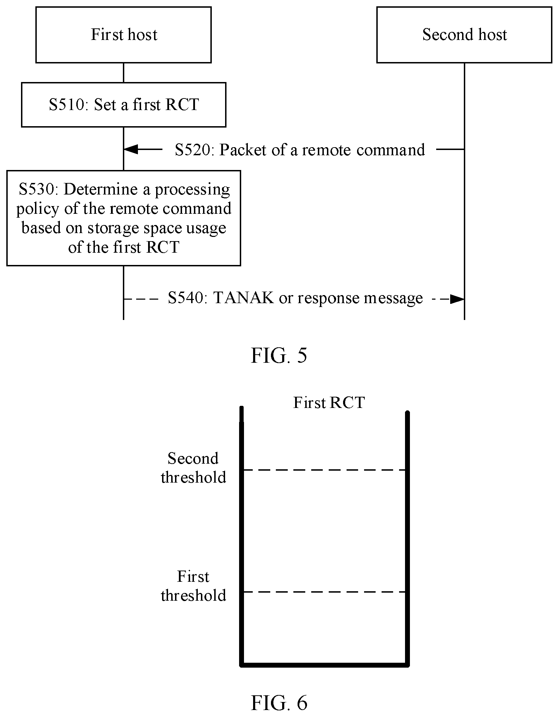

FIG. 5 is a schematic flowchart of a communication method according to this application. The method is applied to a scenario in which a first host communicates with at least one second host, for example, the scenario shown in FIG. 2.

In an embodiment shown in FIG. 5, the first host may be used as a receiver (or referred to as a target (target) device), and the second host may be used as a transmitter (or referred to as a source device (initiator)). For the receiver, the receiver is a local device, the transmitter is a remote device, and a command received by the receiver from the transmitter is referred to as a remote command.

For example, the first host may be a physical machine or a virtual machine. If the first host is the virtual machine, a step performed by the first host may be performed by the virtual machine. Similarly, the second host may be a physical machine or a virtual machine. If the second host is the virtual machine, a step performed by the second host may be performed by the virtual machine.

Specifically, the method shown in FIG. 5 includes the following steps.

S510: The first host sets a first RCT.

In this embodiment, the first host may be understood as the destination device, and may receive a remote command sent by the at least one second host. For example, the first host may be the host B shown in FIG. 4. The second host may be understood as the source device. For example, the second host may be the host A and/or the host C shown in FIG. 4.

In a possible implementation, a TP connection is established between the first host and each second host, and a packet of a remote command from the second host is received through the TP connection. As shown in FIG. 4, a TP connection is established between the host A and the host B, and a TP connection is established between the host C and the host B.

In another possible implementation, when a link layer that can ensure reliable transmission has a retransmission mechanism, a transport connection may not need to be established. The retransmission mechanism that can ensure reliable transmission is on a link layer connection between the first host and each second host, and the packet of the remote command from the second host may be received through the link layer connection.

It should be noted that specific forms of the first host and the second host are not limited in this embodiment, and devices that can implement corresponding functions in this embodiment fall within the protection scope of this application.

For example, the remote command in this embodiment includes but is not limited to a read request and/or an atomic request. For a format and content of the remote command, there are no limitations in this application, and refer to descriptions of the remote command in the conventional technology.

Specifically, the first RCT set by the first host is used to store remote commands corresponding to a plurality of processes, and the plurality of processes belong to the at least one second host.

For example, the first host communicates with a second host #1 and a second host #2. A process #1 and a process #2 are executed in the second host #1, and a process #3 and a process #4 are executed in the second host #2. The first host may set the first RCT, and the first RCT is used to store remote commands corresponding to the process #1, the process #2, the process #3, and the process #4.

It should be understood that the remote commands of the plurality of processes in this embodiment may be understood as remote commands received by the first host through a Jetty. The first host may receive remote commands from one or more second hosts through one Jetty. It may be understood that the Jetty corresponds to one or more processes.

The first RCT is set to store the remote commands of the plurality of processes in the at least one second host. This avoids setting a corresponding RCT for each process, and implements multi-process RCT sharing, that is, implements storage resource sharing. In addition, in this solution, the plurality of processes share one RCT, which may be set to have larger space, thereby ensuring a remote command transmission rate.

For example, that the first host sets the first RCT includes: The first host sets at least one RCT, where the first RCT is any one of the at least one RCT.

If the first host sets a plurality of RCTs, priorities of processing remote commands stored in the plurality of RCTs are different. For example, the first host sets an RCT #1, an RCT #2, and an RCT #3, and priorities of processing remote commands stored in the three RCTs are as follows: A priority of processing a remote command stored in the RCT #1 is higher than a priority of processing a remote command stored in the RCT #2, and the priority of processing the remote command stored in the RCT #2 is higher than a priority of processing a remote command stored in the RCT #3. In this case, when receiving a packet of a remote command, the first host may determine, based on indication information that is carried in the packet and that indicates the priority of processing the remote command, a priority of processing the remote command, and forward the received remote command to an RCT that matches the priority based on the priorities of processing the remote commands stored in the plurality of RCTs.

If the first host sets the plurality of RCTs, the plurality of RCTs may correspond to different processes, and the different processes may belong to different second hosts or a same second host. For example, the first host establishes connections with a second host #1, a second host #2, and a second host #3. A process in the second host #1 includes a process #1, a process in the second host #2 includes a process #2, and a process in the second host #3 includes a process #3. The first host sets an RCT #1 and an RCT #2. The RCT #1 is used to store a remote command of the process #1, and the RCT #2 is used to store remote commands of the process #2 and the process #3.

It should be understood that a specific quantity of RCTs set by the first host is not limited in this embodiment. For example, the first host receives remote commands corresponding to P processes in N second hosts, and the first host sets M RCTs, where N is a positive integer, P is an integer greater than or equal to 2, and M is a positive integer less than P.

Optionally, in this embodiment, the RCT set by the first host may be shared by the plurality of processes. In this case, the RCT set by the first host may also be referred to as a shared RCT.

In this embodiment, because the RCT is shared by the remote commands corresponding to the plurality of processes in the at least one second host, the plurality of processes share the RCT. When the RCT is full, and the first host is forced to discard a received remote command, there may be a case in which a remote command sent by a process in a second host is constantly discarded.

For example, it is assumed that when a remote command sent through a Jetty X of the second host #1 reaches the first host, the RCT of the first host is full. In this case, the remote command is discarded, and the first host notifies the second host #1 to retransmit the remote command. When the RCT is not full, the first host receives a remote command sent through a Jetty of another second host #2. When the first host receives the remote command sent through the Jetty X of the second host #1 again, the RCT is full again, and the remote command of the second host #1 is discarded again. Therefore, there may be a case in which the remote command sent through the Jetty X of the second host #1 is constantly discarded (or referred to as a case in which the remote command is starved).

To reduce a risk that a remote command of a process in a second host is constantly discarded, in this embodiment, the first host determines a processing policy of the remote command based on storage space usage of the first RCT.

The method procedure shown in FIG. 5 further includes the following steps.

S520: The first host receives the packet of the remote command from the second host.

The second host may be any one of the at least one second host.

In a possible implementation, the second host may send the packet of the remote command to the first host via a TPG between the second host and the first host.

In this implementation, after a transport layer of the first host receives the packet of the remote command, if verification on the packet succeeds, the transport layer of the first host returns a TPACK (transport acknowledgment) to the second host. The TPACK is used to notify a transport layer of the source device that 'the packet has been correctly received'. If a PSN in a TPH is checked and it is found that a packet is lost on a network, a transport selective ACK (transport selective ACK, TPSACK) is returned. The TPSACK carries a PSN, and the TPSACK is used to notify the source device that 'the packet has been correctly received, but there is the lost packet, and the packet corresponding to the lost PSN needs to be retransmitted'.

In another possible implementation, the second host may send the packet of the remote command to the first host through the link layer connection. In this implementation, the first host does not need to notify the second host of whether the packet is correctly received via the TPACK or the TPSACK.

It should be understood that a manner of packet transmission between the second host and the first host is not limited in this embodiment. This embodiment mainly relates to how to determine the processing policy of the remote command based on the storage space usage of the first RCT in a scenario in which the first host correctly receives the packet of the remote command.

For example, the first host includes at least one virtual machine (virtual machine, VM), and a destination address of the packet of the remote command sent by the second host may be an address of any one of the at least one VM. After receiving the packet of the remote command from the network, the first host performs verification at a link layer, an IP layer, and the transport layer (for example, determines whether a packet loss occurs based on information such as the PSN and an SSN), and learns, by searching a table based on a destination entity identifier (Destination Entity ID, DEID), that a destination of the remote command is a VM #1. The transport layer strips the TPH and a part before the TPH from the packet of the remote command, and transfers the remaining part to the VM #1.

S530: The first host determines the processing policy of the remote command based on the storage space usage of the first RCT.

In this embodiment, the storage space usage of the RCT may be represented by a parameter like remaining storage space of the RCT, used storage space of the RCT, a storage space occupation rate of the RCT, a storage space usage rate of the RCT, or a storage space utilization rate of the RCT.

For example, in this embodiment, a first threshold may be set in the first RCT, and the first threshold may also be referred to as a first waterline.

Specifically, when the first threshold is set in the first RCT, that the first host determines the processing policy of the remote command based on the storage space usage of the first RCT includes: The first host determines the processing policy of the remote command based on the first threshold and the storage space usage of the first RCT. For example, if used storage space of the first RCT exceeds the first threshold, the remote command is processed according to a first processing policy; or if the used storage space of the first RCT does not exceed the first threshold, the remote command is processed according to a second processing policy. The first processing policy is different from the second processing policy. For example, the first processing policy is to determine, based on a type of the remote command, to receive or discard the remote command, and the second processing policy is to receive the remote command.

For example, a packet header of the remote command may carry a first identifier, the first identifier is used to identify that the remote command is an initially transmitted remote command or a retransmitted remote command, the first identifier may be referred to as a retransmission flag, and the first host may preferentially receive a remote command with the retransmission flag based on the storage space usage of the first RCT.

In a possible implementation, when the used storage space of the first RCT exceeds the first threshold, the first processing policy is related to whether the remote command received by the first host is an initially transmitted remote command or a retransmitted remote command.

For example, if the remote command is the initially transmitted remote command, it is determined to discard the remote command; or if the remote command is the retransmitted remote command, it is determined to receive the remote command, and store the remote command in the first RCT.

In this implementation, after determining to discard the remote command, the first host sends a first TANAK to the second host, where the first TANAK is used to indicate to retransmit the remote command after first duration. For example, the first TANAK carries indication information #1, and the indication information #1 indicates the second host to retransmit the remote command after the first duration after the first TANAK is received. After the first host determines that the remote command is received, when the remote command is executed, the first host sends a response message to the second host.

Further, a second threshold may be set in the first RCT, where the second threshold is greater than the first threshold. FIG. 6 is a diagram of setting thresholds in the first RCT according to an embodiment of this application. For example, the first host sets a drop_new waterline and a delay_rty waterline in the first RCT. The drop_new waterline is the first threshold, and the delay_rty waterline is the second threshold.

When the first threshold and the second threshold are set in the first RCT, that the first host determines the processing policy of the remote command based on the storage space usage of the first RCT includes: determining the processing policy of the remote command based on the second threshold and the storage space usage of the first RCT. For example, if the used storage space of the first RCT exceeds the second threshold, the remote command is processed according to a third processing policy; or if the used storage space of the first RCT does not exceed the second threshold, it is determined whether the used storage space of the first RCT exceeds the first threshold, and the remote command is processed according to the first processing policy and the second processing policy based on a determining result.

In another possible implementation, when the used storage space of the first RCT exceeds the second threshold, the third processing policy is related to whether the remote command received by the first host is an initially transmitted remote command or a retransmitted remote command.

For example, if the remote command is the initially transmitted remote command, it is determined to discard the remote command; or if the remote command is the retransmitted remote command, it is determined to receive the remote command, and store the remote command in the first RCT.

In this implementation, after determining to discard the remote command, the first host sends a second TANAK to the second host, where the second TANAK is used to indicate to retransmit the remote command after second duration. For example, the second TANAK carries indication information #2, and the indication information #2 indicates the second host to retransmit the remote command after the second duration after the second TANAK is received. After the first host determines that the remote command is received, when the remote command is executed, the first host sends a response message to the second host.

It should be noted that the second duration is greater than the first duration. For example, the second duration is twice the first duration. In other words, when the used storage space of the first RCT exceeds the second threshold, the first RCT has stored a large quantity of to-be-processed remote commands, and congestion is severe. Therefore, the first host may indicate, by using the second TANAK, the second host to increase a retransmission interval, to reduce a remote command sending rate.

For example, that the first host determines the processing policy of the remote command based on the usage of the first RCT further includes: if the first RCT is full, determining to discard the remote command. In addition, the first host sends a third TANAK to the second host, where the third TANAK is used to indicate to retransmit the remote command. For the initially transmitted remote command, the third TANAK is used to indicate the second host to retransmit the remote command after the second duration after the third TANAK is received, and for the retransmitted remote command, the third TANAK is used to indicate the second host to retransmit the remote command after the first duration after the third TANAK is received, so that a transmission frequency of a 're-retransmitted remote command' is higher than that of an 'initially retransmitted remote command', and therefore the 're-retransmitted remote command' is more likely to be received than the 'initially retransmitted remote command'.

S540: The first host sends a TANAK or a response message to the second host.

It can be learned from step S530 that the first host may feed back the TANAK (for example, the first TANAK, the second TANAK, or the third TANAK shown above) to the second host. The TANAK reaches the second host over the network to notify the second host that the remote command needs to be retransmitted after a specific time interval (for example, the first duration or the second duration).

The first host may feed back the response message to the second host. The response message reaches the second host over the network.

In the embodiment shown in FIG. 5, the first RCT is set in the first host, and the first RCT may be used to store the remote commands corresponding to the plurality of processes of the at least one second host. When receiving a remote command from the second host, the first host may determine a processing policy of the remote command based on the storage space usage of the first RCT. In the communication method, the first host may set one RCT for the plurality of processes of the at least one second host, the plurality of processes share the RCT, and an RCT does not need to be set for each process. Therefore, resource sharing can be implemented, and resource overheads can be reduced. In addition, in this solution, the plurality of processes share one RCT, which may be set to have larger space, thereby ensuring a remote command transmission rate.

Further, a retransmission identifier is added to the packet, and/or a threshold is set in the RCT, to reduce starvation that may be caused by sharing of the RCT by the plurality of processes.

For ease of understanding, the communication method provided in this application is described with reference to a specific example.

Example 1: The remote command is a read (Read) request and a TPG is established between the destination device and the source device. The example 1 includes the following steps.

Step 1: An application process of the source device (that is, the foregoing second host) delivers a 'read' transaction to a JFS of the source device.

Step 2: The JFS of the source device sends the 'read' transaction to the TPG and encapsulates a TPH.

Step 3: A link layer of the source device encapsulates a link header to obtain a 'read' packet, a TP connection with lightest load is selected in the TPG for the 'read' packet, and the packet is sent to the destination device (that is, the foregoing first host) over the network.

Step 4: The transport layer of the destination device receives the packet, if verification on the packet succeeds, the transport layer of the destination device returns a TPACK (transport acknowledgment) to the source device. The TPACK is used to notify the transport layer of the source device that 'the packet has been correctly received'. If a PSN in the TPH is checked and it is found that a packet is lost on the network, a transport selective acknowledgment (Transport Selective ACK, TPSACK) is returned. The TPSACK carries a PSN of the lost packet, and the TPSACK is used to notify the source device that 'the packet has been correctly received, but there is the lost packet, and the packet corresponding to the lost PSN needs to be retransmitted'.

Step 5: The transport layer of the destination device parses the packet and learns that a destination of the packet is a VM. For example, the transport layer of the destination device determines the destination of the packet by querying a table based on a DEID. The transport layer of the destination device strips the TPH and a part before the TPH from the packet, and forwards the remaining part to the VM.

Step 6: The VM of the destination device receives the 'read' packet and determines a processing policy of the 'read' packet based on the storage space usage of the RCT.

For example, the VM of the destination device receives the 'read' packet, and determines whether the RCT is full.

If the RCT is full (that is, no storage space is available), the destination device discards the 'read' packet, and returns a TANAK to the source device to notify the source device to retransmit the 'read' packet. In addition, if the 'read' packet is initially transmitted, indication information carried in the TANAK is used to indicate to retransmit the 'read' packet after second duration after the TANAK is received; or if the 'read' packet is retransmitted, indication information carried in the TANAK is used to indicate to retransmit the 'read' packet after first duration after the TANAK is received.

If the RCT is not full but a used depth of the RCT exceeds the delay_rty waterline, if the 'read' packet is initially transmitted, a TANAK is returned to the source device to notify the source device to retransmit the 'read' packet after the second duration after the TANAK is received; or if the 'read' packet is retransmitted, the 'read' packet is received and stored in the RCT, and a read response (Read Response) is returned when the 'read' packet is executed.

If the RCT is not full, but the used depth of the RCT exceeds the drop_new waterline and does not exceed the delay_rty waterline, if the 'read' packet is initially transmitted, a TANAK is returned to the source device to notify the source device to retransmit the 'read' packet after the first duration after the TANAK is received; or if the 'read' packet is retransmitted, the 'read' packet is received and stored in the RCT, and a read response (Read Response) is returned when the 'read' packet is executed.

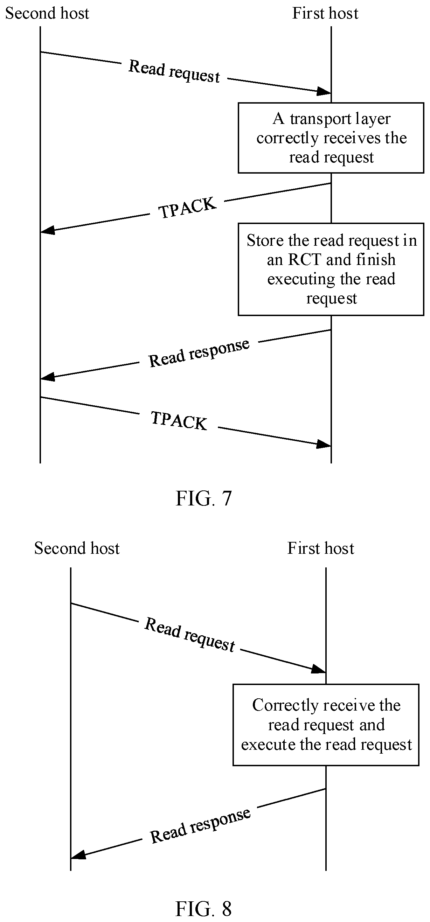

In addition, for ease of understanding, the following describes corresponding procedures in four cases, where the remote command is received when there is a TP connection between the first host and the second host; the remote command is received when there is no TP connection between the first host and the second host; the remote command is discarded when there is a TP connection between the first host and the second host; and the remote command is discarded when there is no TP connection between the first host and the second host, with reference to FIG. 7 to FIG. 10.

FIG. 7 is a diagram of remote command transmission according to an embodiment of this application.

It can be learned from FIG. 7 that the TPG is established between the first host and the second host, and the remote command is a read request (read response). The second host sends a read request to the first host via the TPG. After receiving a packet carrying the read request, the transport layer of the first host returns a TPACK to notify the second host that the read request has been correctly received. The first host determines a processing policy of the read request based on the storage space usage of the RCT. In a scenario shown in FIG. 7, the first host determines to store the read request in the RCT. After the read request is executed, the first host sends a read response to the second host to notify the source device that the read request has been successfully executed. After receiving the read response, the second host may return a TPACK to notify the first host that the read response has been correctly received.

FIG. 8 is a diagram of other remote command transmission according to an embodiment of this application.

It can be learned from FIG. 8 that there is no TP connection between the first host and the second host, and the remote command is a read request. The second host sends a read request to the first host. The first host determines a processing policy of the read request based on the storage space usage of the RCT. In a scenario shown in FIG. 8, the first host determines to store the read request in the RCT. After the read request is executed, the first host sends a read response to the second host to notify the source device that the read request has been successfully executed.

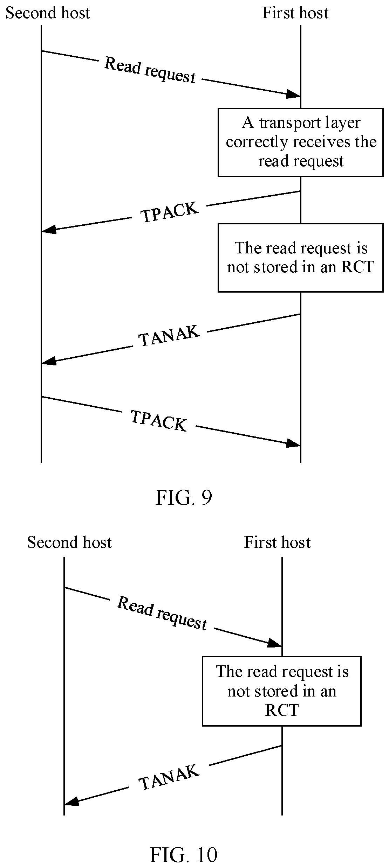

FIG. 9 is a diagram of other remote command transmission according to an embodiment of this application.

It can be learned from FIG. 9 that the TPG is established between the first host and the second host, and the remote command is a read request. The second host sends a read request to the first host via the TPG. After receiving a packet carrying the read request, the transport layer of the first host returns a TPACK to notify the second host that the read request has been correctly received. The first host determines a processing policy of the read request based on the storage space usage of the RCT. In a scenario shown in FIG. 9, the first host determines to discard the read request, and the first host sends a TANAK to the second host to notify the source device to retransmit the read request. After receiving the TANAK, the second host may return a TPACK to notify the first host that the TANAK has been received.

FIG. 10 is a diagram of other remote command transmission according to an embodiment of this application.

It can be learned from FIG. 10 that there is no TP connection between the first host and the second host, and the remote command is a read request. The second host sends a read request to the first host. The first host determines a processing policy of the read request based on the storage space usage of the RCT. In a scenario shown in FIG. 10, the first host determines to discard the read request, and the first host sends a TANAK to the second host to notify the source device to retransmit the read request.

It should be understood that the specific examples shown in FIG. 5 to FIG. 10 in embodiments of this application are merely intended to help a person skilled in the art better understand embodiments of this application, but are not intended to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

The foregoing mainly describes the solutions provided in embodiments of this application from a perspective of methods. To implement the foregoing functions, corresponding hardware structures and/or software modules for performing the functions are included. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

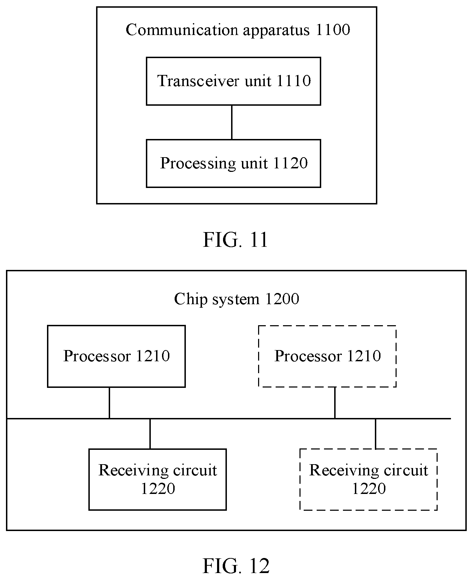

The following describes in detail communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the first host or the second host may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. The following uses an example in which functional modules are obtained through division based on corresponding functions for description.

FIG. 11 is a diagram of a structure of a communication apparatus 1000 according to an embodiment of this application.

In an example, the communication apparatus 1100 may be used in a first host, and the communication apparatus 1000 may be configured to perform the foregoing communication method, for example, configured to perform the method shown in FIG. 5. Specifically, the communication apparatus 1100 may include a transceiver unit 1110 and a processing unit 1120.

The processing unit 1120 is configured to set a first remote command table RCT in the first host, where the first RCT is used to store remote commands corresponding to a plurality of processes, and the plurality of processes belong to at least one second host. The transceiver unit 1010 is configured to receive a packet of a remote command from any second host among the at least one second host. The processing unit 1120 is configured to determine a processing policy of the remote command based on storage space usage of the first RCT.

In an example, with reference to FIG. 5, the transceiver unit 1010 may be configured to perform S520 and S540, and the processing unit 1020 may be configured to perform S510 and S530.

It should be noted that the apparatus in FIG. 11 may also be configured to perform method steps in variations of embodiments shown in the foregoing accompanying drawings. Details are not described herein again.

In another example, the communication apparatus 1100 may be used in a second host, and the communication apparatus 1100 may be configured to perform the foregoing communication method, for example, configured to perform the method shown in FIG. 5.

A processing unit 1120 is configured to generate a packet of a remote command, where a packet header of the remote command includes a first identifier, and the first identifier is used to identify that the remote command is an initially transmitted remote command or a retransmitted remote command. A transceiver unit 1110 is configured to send the packet of the remote command to a first host.

In an example, with reference to FIG. 5, the transceiver unit 1010 may be configured to perform S520 and S540.

It should be noted that the apparatus in FIG. 11 may also be configured to perform method steps in variations of embodiments shown in the foregoing accompanying drawings. Details are not described herein again.

An embodiment of this application further provides a chip system 1200. As shown in FIG. 12, the chip system 1200 includes at least one processor and at least one interface circuit. In an example, when the chip system 1200 includes one processor and one interface circuit, the processor may be a processor 1210 shown in a solid line box (or a processor 1210 shown in a dashed line box) in FIG. 12, and the interface circuit may be an interface circuit 1220 shown in a solid line box (or an interface circuit 1220 shown in a dashed line box) in FIG. 12.

When the chip system 1200 includes two processors and two interface circuits, the two processors include a processor 1210 shown in a solid line box and a processor 1210 shown in a dashed line box in FIG. 12, and the two interface circuits include an interface circuit 1220 shown in a solid line box and an interface circuit 1220 shown in a dashed line box in FIG. 12. This is not limited. The processor 1210 and the interface circuit 1220 may be connected to each other through a wire. For example, the interface circuit 1220 may be configured to receive a signal (for example, instructions stored in a memory). For another example, the interface circuit 1220 may be configured to send a signal to another apparatus (for example, the processor 1210).

For example, the interface circuit 1220 may read the instructions stored in the memory, and send the instructions to the processor 1210. When the instructions are executed by the processor 1210, a communication apparatus is enabled to perform the steps in the foregoing embodiments. Certainly, the chip system 1200 may further include another discrete component. This is not specifically limited in embodiments of this application.

Another embodiment of this application further provides a computer-readable storage medium. The computer-readable storage medium stores instructions. When the instructions are run on a communication apparatus, the communication apparatus performs the steps performed by the communication apparatus in the method procedures shown in the foregoing method embodiments. In some embodiments, the disclosed method may be implemented as computer program instructions encoded in a machine-readable format on a computer-readable storage medium or encoded on another non-transitory medium or product.

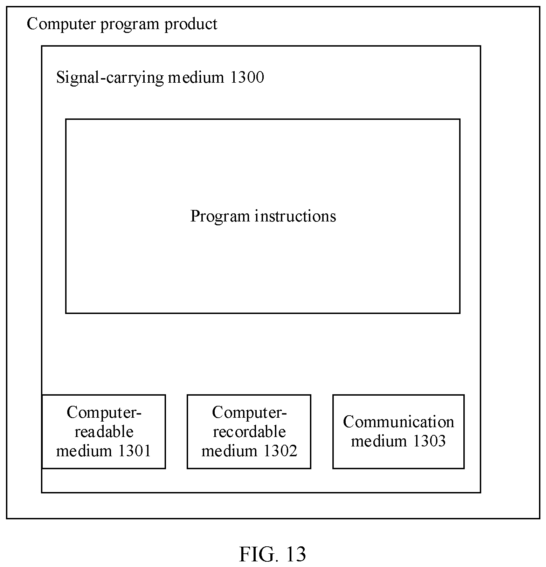

FIG. 13 schematically shows a conceptual partial view of a computer program product according to an embodiment of this application. The computer program product includes a computer program for executing a computer process on a computer device.

In an embodiment, the computer program product is provided by using a signal-carrying medium 1300. The signal-carrying medium 1300 may include one or more program instructions. When the one or more program instructions are run by one or more processors, the functions or some of the functions described in FIG. 5 may be provided. Therefore, for example, one or more features of S510 to S540 in FIG. 5 may be borne by one or more instructions associated with the signal-carrying medium 1300. In addition, the program instructions in FIG. 13 are also described as example instructions.

In some examples, the signal-carrying medium 1300 may include a computer-readable medium 1301, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal-carrying medium 1300 may include a computer-recordable medium 1302, for example, but not limited to, a memory, a read/write (R/W) CD, or an R/W DVD.

In some implementations, the signal-carrying medium 1300 may include a communication medium 1303, for example, but not limited to, a digital and/or analog communication medium (for example, an optical fiber, a waveguide, a wired communication link, or a wireless communication link). The signal-carrying medium 1300 may be conveyed by a communication medium 1303 in a wireless form. The one or more program instructions may be, for example, computer-executable instructions or logic implementation instructions.

In some examples, various operations, functions, or actions are provided in response to the one or more program instructions in the computer-readable medium 1301, the computer-recordable medium 1302, and/or the communication medium 1303.

It should be understood that the arrangement described herein is merely used as an example. Therefore, a person skilled in the art will understand that other arrangements and other elements (for example, machines, interfaces, functions, sequences, and function groups) may be used instead, and some elements may be omitted together based on a desired result. In addition, many of the described elements are functional entities that may be implemented as discrete or distributed components, or implemented in any appropriate combination at any appropriate location in combination with another component.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer-executable instructions. When the computer-executable instructions are loaded and executed on a computer, all or some of the procedures or functions according to embodiments of this application are generated. The computer may be a general-purpose computer, a special-purpose computer, a computer network, or another programmable apparatus.

The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first host, wherein the method comprises:
setting a first remote command table RCT in the first host, wherein the first RCT is used to store remote commands corresponding to a plurality of processes, and the plurality of processes belong to at least one second host; and
receiving a packet of a remote command from any second host among the at least one second host, and determining a processing policy of the remote command based on storage space usage of the first RCT.

2. The method according to claim 1, wherein a packet header of the remote command comprises a first identifier, and the first identifier is used to identify that the remote command is an initially transmitted remote command or a retransmitted remote command.

3. The method according to claim 2, wherein the method further comprises:
setting a first threshold in the first RCT; and
determining the processing policy of the remote command based on the storage space usage of the first RCT comprises:
determining the processing policy of the remote command based on the first threshold and the storage space usage of the first RCT.

4. The method according to claim 3, wherein determining the processing policy of the remote command based on the first threshold and the storage space usage of the first RCT comprises:
processing the remote command according to a first processing policy if used storage space of the first RCT exceeds the first threshold; or
processing the remote command according to a second processing policy if the used storage space of the first RCT does not exceed the first threshold.

5. The method according to claim 4, wherein processing the remote command according to the first processing policy if the used storage space of the first RCT exceeds the first threshold comprises:
if the remote command is the initially transmitted remote command, determining to discard the remote command; or
if the remote command is the retransmitted remote command, determining to receive the remote command, and store the remote command in the first RCT.

6. The method according to claim 5, wherein when it is determined to discard the remote command, the method further comprises:
sending a first transaction negative acknowledgment TANAK, wherein the first TANAK is used to indicate to retransmit the remote command after first duration after the first TANAK is received.

7. The method according to any one of claims 3 to 6, wherein the method further comprises:
setting a second threshold in the first RCT, wherein the second threshold is greater than the first threshold; and
determining the processing policy of the remote command based on the storage space usage of the first RCT comprises:
determining the processing policy of the remote command based on the second threshold and the storage space usage of the first RCT.

8. The method according to claim 7, wherein determining the processing policy of the remote command based on the second threshold and the storage space usage of the first RCT comprises:
if the used storage space of the first RCT exceeds the second threshold and the remote command is the initially transmitted remote command, determining to discard the remote command; and
the method further comprises:
sending a second transaction negative acknowledgment TANAK, wherein the second TANAK is used to indicate to retransmit the remote command after second duration after the second TANAK is received, and the second duration is greater than the first duration.

9. The method according to any one of claims 2 to 8, wherein determining the processing policy of the remote command based on the usage of the first RCT comprises:
if the first RCT is full, determining to discard the remote command; and
the method further comprises:
sending a third transaction negative acknowledgment TANAK, wherein the third TANAK is used to indicate to retransmit the remote command, wherein
if the remote command is the retransmitted remote command, the third TANAK is used to indicate to retransmit the remote command after the first duration after the third TANAK is received.

10. The method according to any one of claims 1 to 9, wherein the method further comprises:
setting a second RCT in the first host, wherein priorities of processing the remote command stored in the first RCT and a remote command stored in the second RCT are different; or a process corresponding to the second RCT is different from a process corresponding to the first RCT.

11. The method according to any one of claims 1 to 10, wherein the method further comprises:
separately establishing a transport group TPG between the first host and the at least one second host.

12. The method according to any one of claims 1 to 11, wherein the remote command comprises a read request or an atomic request.

13. The method according to any one of claims 1 to 12, wherein receiving the packet of the remote command from the any second host among the at least one second host comprises:
receiving the packet of the remote command from the any second host among the at least one second host through a communication interface Jetty, wherein the Jetty is configured to receive a packet of a remote command from the at least one second host.

14. A communication method, applied to a second host, wherein the method comprises:
generating a packet of a remote command, wherein a packet header of the remote command comprises a first identifier, and the first identifier is used to identify that the remote command is an initially transmitted remote command or a retransmitted remote command; and
sending the packet of the remote command to a first host.

15. The method according to claim 14, wherein the method further comprises:
receiving a first transaction negative acknowledgment TANAK from the first host, wherein the first TANAK is used to indicate to retransmit the remote command after first duration after the first TANAK is received; or
receiving a second transaction negative acknowledgment TANAK from the first host, wherein the second TANAK is used to indicate to retransmit the remote command after second duration after the second TANAK is received, and the second duration is greater than the first duration.

16. A communication method, comprising:
setting, by a first host, a first remote command table RCT in the first host, wherein the first RCT is used to store remote commands corresponding to a plurality of processes, and the plurality of processes belong to at least one second host;
sending, by the second host, a packet of a remote command to the first host, wherein the second host is any one of the at least one second host; and
determining, by the first host, a processing policy of the remote command based on storage space usage of the first RCT.

17. A communication system, comprising a first host and at least one second host, wherein
the first host is configured to set a first remote command table RCT in the first host, wherein the first RCT is used to store remote commands corresponding to a plurality of processes, and the plurality of processes belong to the at least one second host;
the second host is configured to send a packet of a remote command to the first host, wherein the second host is any one of the at least one second host; and
the first host is configured to determine a processing policy of the remote command based on storage space usage of the first RCT.

18. A communication apparatus, comprising a processor, configured to read instructions stored in a memory, wherein when the processor executes the instructions, the communication apparatus is enabled to implement the method according to any one of claims 1 to 13, or the communication apparatus is enabled to implement the method according to claim 14 or 15.

19. A computer program product, wherein the computer program product comprises computer program code; and when the computer program code is run on a computer, the method according to any one of claims 1 to 13 is performed; or when the computer program code is run on the computer, the method according to claim 14 or 15 is performed.

20. A computer-readable storage medium, comprising a computer program, wherein when the computer program is run on a computer system, a processing module in the computer system is enabled to perform the method according to any one of claims 1 to 13; or when the computer program is run on the computer system, the processing module in the computer system is enabled to perform the method according to claim 14 or 15.
